# EUROPEAN PATENT APPLICATION

(11) **EP 2 333 540 A1**
(43) Date of publication of application: **15.06.2011**
(21) Application number: 09814195.5
(22) Date of filing: 04.06.2009
(51) Int. Cl.: G01N 30/88, B01D 15/08, B01J 20/281, G01N 30/26

(54) **FILLER FOR HYDROPHILIC INTERACTION CHROMATOGRAPHY**

(30) Priority: 17.09.2008 JP 2008237364
(71) Applicant: Shiseido Company, Ltd., Chuo-ku Tokyo 104-8010 (JP)
(72) Inventor: KANDA, Taketoshi, Yokohama-shi Kanagawa 224-8558 (JP); IGARASHI, Yasuo, Yokohama-shi Kanagawa 236-8643 (JP); SAKUMA, Kenichi, Yokohama-shi Kanagawa 224-8558 (JP); TOUJO, Yousuke, Yokohama-shi Kanagawa 224-8558 (JP)
(74) Representative: Merkle, Gebhard
(86) International application number: PCT/JP2009/002514
(87) International publication number: WO 2010/032349

(57) **Abstract**

The object of the present invention is to provide a packing material and a separation method that manifest excellent hydrophilic interactions.

The present invention provides a packing material for hydrophilic interaction chromatography consisting of a modified support treated with the surface modifier represented by the following formula (6) or (7). (In this formula, m denotes 2-6 and n denotes 1-4. X₁, X₂, and X₃, independent of each other, denote a methoxy group, ethoxy group, or halogen. Up to two of X₁, X₂ and X₃ can be any of the following groups: a methyl group, ethyl group, propyl group, isopropyl group, butyl group, or isobutyl group. )

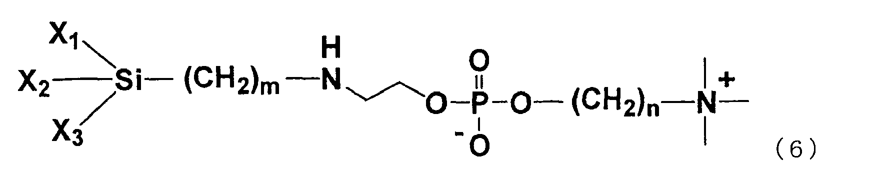

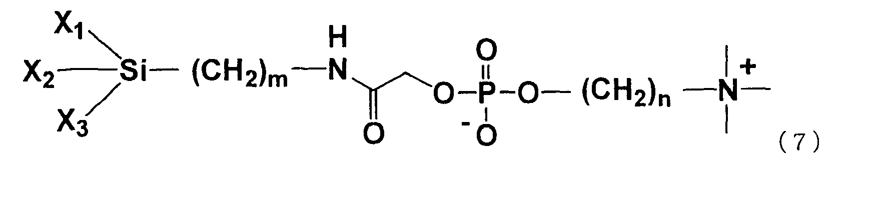

## Description

### TECHNICAL FIELD

The present invention relates to a packing material for hydrophilic interaction chromatography and separation methods using such a packing material.

Specifically this is an invention pertaining to a packing material that exhibits superior hydrophilic interactions by having a high density of phosphorylcholine groups on the surface of the packing material. The packing material of the present invention enables superior separation of polar compounds with a very sharp peak shape and sufficient retention.

### BACKGROUND ART

Polymers having phosphorylcholine groups have been researched as biocompatible polymers, and biocompatible materials prepared by coating various base agents with such polymers have been developed.

For example, Patent Document 1 discloses a cosmetic in which powder coated with a homopolymer or copolymer of 2-methacryloyloxyethyl phosphorylcholine is used as a cosmetic powder to improve moisture retention and adhesion to the skin.

Also, Patent Document 2 and Patent Document 3 disclose medical materials and a separation agent coated with polymers having phosphorylcholine groups.

The surface of the aforementioned materials are coated with a polymer obtained by polymerizing monomers having the phosphorylcholine structure prepared by reacting an acrylic-type monomer mainly having hydroxyl groups with 2-chloro-1,3,2-dioxaphosphorane-2-oxide and then using trimethylamine to turn the reaction product into a quaternary ammonium (refer to Patent Documents 4 and 5 for the preparation method).

Patent Document 4 describes the preparation of a copolymer of 2-methacroyloxyethylphosphorylcholine and methacrylate, and Patent Document 5 describes the preparation of a homopolymer of 2-methacryloyloxyethyl phosphorylcholine.

The biocompatibility as shown above is a characteristic based on the fact that the phosphorylcholine constitutes the outermost surface of cell membranes; in general, one of the most important physicochemical factors for acquiring biocompatibility is hydrophilicity. Phosphorylcholine groups' high hydrophilicity is mentioned also in Non-Patent Document 1. Another important point is that the phosphorylcholine group is electrically neutral despite its zwitterion structure.

On the other hand, chromatography utilizing hydrophilic interactions has recently become increasing important in biology and medical drugs. Hydrophilic interaction chromatography is a method for separating substances by using the interaction between hydrophilic substances that arises when a high ratio of an organic solvent is used for the mobile phase. This hydrophilic interaction chromatography uses the exact opposite interaction compared with hydrophobic interaction chromatography, which is used most commonly. Hydrophobic interaction chromatography achieves separation by utilizing differences in strength of interactions between hydrophobic functional groups on the surface of packings, representatively octadecyl groups (C18 groups), and the hydrophobicity of the target substance.

Hydrophobic interaction chromatography excels in achieving separation by recognizing subtle differences between hydrophobic substances, for example, but its ability to separate between hydrophilic substances is very weak and it is not suitable for such analysis.
In contrast, hydrophilic interaction chromatography is a method in which the packing material is modified with hydrophilic functional groups and separation is done by recognizing the subtle differences in hydrophilicity between target substances.

In biological systems, where water is abundant, hydrophilic compounds have various important physiological functions. For example, sugars, nucleic acid bases that constitute DNA and such, amino acids that constitute proteins, and water soluble vitamins and hormones are highly hydrophilic and therefore analysis using common hydrophobic interaction columns has been very difficult.

Some packing materials for hydrophilic interaction chromatography, which is suitable for the analysis of hydrophilic substances, have been in practical use. The simplest example of such a packing material is a column packed with silica itself. For example, it is commercially available as Atlantis Hilic Silica from Waters Corporation. Such a packing material utilizes hydrophilicity that silica itself possesses.

However, there is a problem in that silica gradually dissolves when a mobile phase containing water is used over a long time. In addition, as is widely known, silanol is ionized and takes on a negative charge, resulting in problems such as distortion of the peak shape and/or adsorption of a target substance having a positive charge.

There are some packing materials in which a silane coupling agent is used to modify the packing material to prevent dissolution of the silica. For example, a packing material made by immobilizing diol groups (a functional group having two hydroxyl groups), as hydrophilic functional groups, on silica has been made available by Nippon Dionex K.K. Also, a column having carbamoyl groups as hydrophilic functional groups is commercially available from Tosoh Corporation. Columns using these two hydrophilic functional groups, including the aforementioned columns using silica itself, are widely recognized as hydrophilic interaction columns and many analyses have been conducted on them.

Patent Documents 6 and 7 disclose an organic silane surface modifier (i. e. a silane coupling agent) having the betaine structure (i.e. the zwitterion structure). According to Patent Document 6, a silane coupling agent having sulfobetaine composed of the positive charge of the quaternary ammonium and the negative charge of sulfonic acid can be obtained by reacting dimethylaminoalkyl silane with 1,3-propanesulfone in an organic solvent.

Patent Document 7 describes a method of manufacturing a silane coupling agent having carboxybetaine composed of quaternary ammonium and a carboxyl group. These silane coupling agents can be used to modify the silica surface to be more hydrophilic. However, although the betaine of such structures can give hydrophilicity to the substance surface, electric neutrality is not achieved due to the uneven strength of the positive charge and the negative charge in betaine. For example, sulfobetaine is negatively charged due to the strong acidity of sulfonic acid and carboxybetaine shows a positive charge due to quaternary ammonium.
Therefore, such betaine structures engender not only the hydrophilic interactions but also the ion exchange interactions at the same time, resulting in adsorption of ionic compounds and distortion of the peak shape.

On the other hand, a phosphorylcholine group is an electrically neutral betaine functional group. Non-Patent Document 1 reports a reduction in protein adsorption due to phosphorylcholine groups chemically grafted onto the support. Also, Non-Patent Document 2 shows hydrophilic interaction chromatography using phosphorylcholine groups bonded to the surface by means of the graft polymerization.

However, the packing material modified with the phosphorylcholine group that was studied in the aforementioned Non-Patent Document 1 is observed to exhibit interactions that are believed to be of an ion exchanging nature. The reason why the packing material modified with phosphorylcholine groups, which should fundamentally be electrically neutral, exhibits ion exchange properties is believed to be insufficiency of modification by means of polymers such as graft polymerization, which results in charges originated from silica affecting the separation.
Because of what is described above, the technical common sense of those who are skilled in the art has dictated that a packing material modified with phosphorylcholine groups cannot be used for a hydrophilic interaction column.
On the other hand, it was also quite difficult to use graft polymerization to modify, quantitatively and at a high density, the surface of the support that is to become the packing material with phosphorylcholine groups, which have a very high degree of steric hindrance.

Patent Document 8 mentions a packing material for chromatography in which the support surface is modified with phosphorylcholine groups.
However, the packing material for chromatography mentioned in Patent Document 8 was mainly for use with size exclusion chromatography; those who are skilled in the art did not have the idea of using this as a packing material for separating polar compounds by means of the hydrophilic interactions.

### PRIOR ART DOCUMENTS

### PATENT DOCUMENTS

Patent Document 1: Japanese Patent Laid-Open H7-118123 bulletin
Patent Document 2: Japanese Patent Laid-Open 2000-279512 bulletin
Patent Document 3: Japanese Patent Laid-Open 2002-98676 bulletin
Patent Document 4: Japanese Patent Laid-Open H9-3132 bulletin
Patent Document 5: Japanese Patent Laid-Open H10-298240 bulletin
Patent Document 6: Japanese Patent Laid-Open H5-222064 bulletin
Patent Document 7: Japanese Patent Laid-Open S63-295593 bulletin
Patent Document 8: Japanese Patent Laid-Open 2005-187456 bulletin

### NON- PATENT DOCUMENTS

Non-Patent Document 1: Water in Biomaterials Surface Science. Edited by M. Morra. (2001 John Wiley & Sons, Ltd.)
Non-Patent Document 2: Tohru Ikegami et. al, J. Chrom A., 2008, 1184, 474-503

### DISCLOSURE OF INVENTION

### TECHNICAL PROBLEM

It is difficult to uniformly coat the entire surface of silica having a complex pore structure by using a method in which the substance is modified by coating its surface with a polymer having phosphorylcholine groups; in some cases the fundamental characteristics of the support, such as the fine structure of pores, can be lost.
This is deeply related to the description in Non-Patent Document 2 to the effect that the number of theoretical plates, which indicates the degree of sharpness of peaks, is low for the columns packed with phosphorylcholine group-modified silica introduced by means of graft polymerization.

Hydrophilic modification using a low molecular weight silane coupling agent such as diol and carbamoyl groups also has issues such as ion exchange due to the negative charge of silanol groups of silica and a reduction in hydrophilicity due to the hydrophobic parts of the modification chains.

As described thus far, current hydrophilic interaction chromatography has issues such as a reduction in the number of theoretical plates of peaks from some hydrophilic compounds and a substantial change in the retention time due to the salt concentration in the mobile phase.

The inventors conducted earnest investigation to solve the aforementioned issues. Separation of polar compounds was conducted by using a packing material prepared by bonding phosphorylcholine groups that were not the polymers as in graft polymerization in Non-Patent Document 1 to the support surface (i.e. using the packing material described in Patent Document 8); as a result, surprisingly, the ion exchange properties of the packing material was suppressed and excellent hydrophilic interactions manifested, enabling superior separation with very sharp peaks and sufficient retention times, thus completing the present invention.

### TECHNICAL SOLUTION

That is, the present invention provides a packing material for hydrophilic interaction chromatography wherein phosphorylcholine groups represented by the following formula (1) are chemically directly bonded to the support surface.

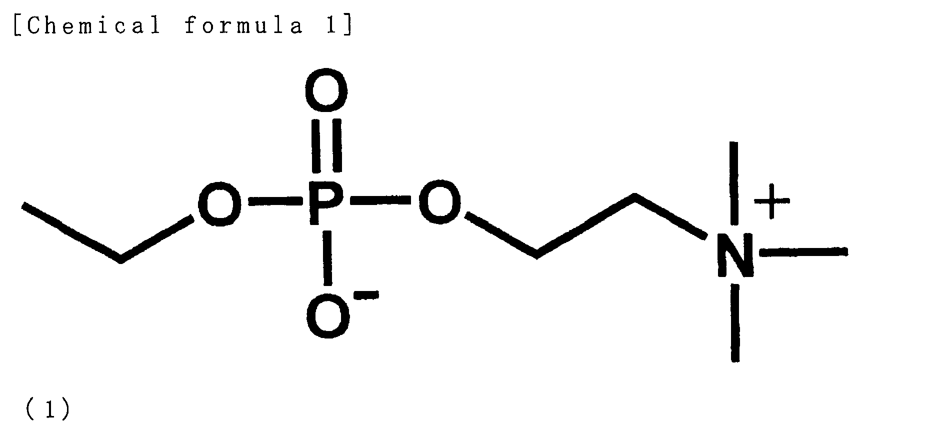

Also, the present invention provides a packing material for hydrophilic interaction chromatography consisting of a modified support treated with the surface modifier represented by the following formula (2). 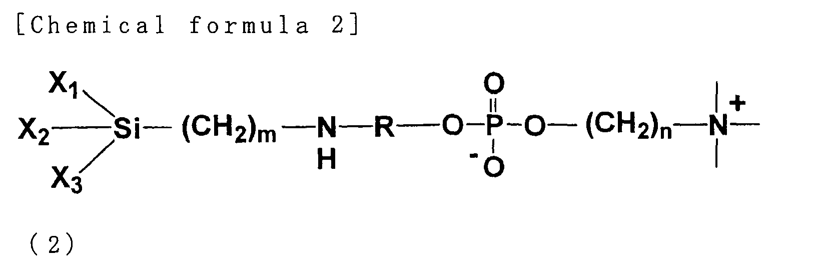 In this formula, m denotes 2-6 and n denotes 1-4.
X₁, X₂ and X₃, independent of each other, denote a methoxy group, ethoxy group, or halogen. Up to two of X₁, X₂, and X₃ can be any of the following groups: a methyl group, ethyl group, propyl group, isopropyl group, butyl group, or isobutyl group.
R is one of the structures in the following formulas (3)-(5) (the chemical compound of formula (2) in the structures of the following formulas (3)-(5) is expressed as A-R-B).

[Chemical formula 3] A-(CH₂)_{L}-B (3)

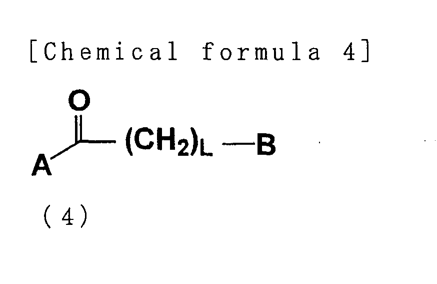

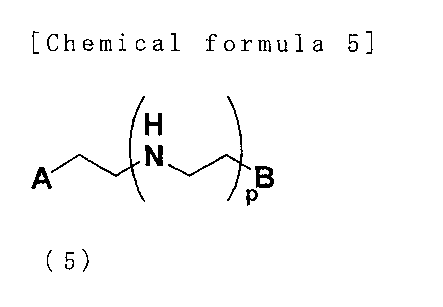

In formulas (3)-(5), L is 1-6, P is 1-3.

Furthermore, the present invention provides a packing material for hydrophilic interaction chromatography consisting of a modified support treated with the surface modifier represented by the following formula (6) or (7). 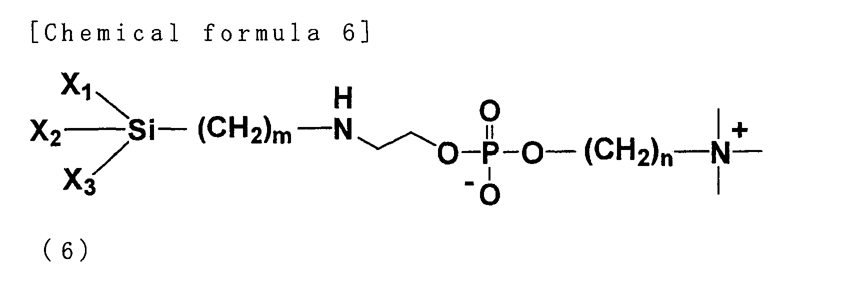 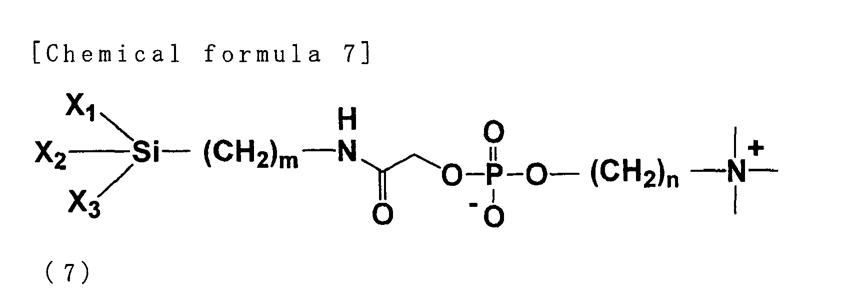 In this formula, m denotes 2-6 and n denotes 1-4. X₁, X₂, and X₃, independent of each other, denote a methoxy group, ethoxy group, or halogen. Up to two of X₁, X₂, and X₃ can be any of the following groups: a methyl group, ethyl group, propyl group, isopropyl group, butyl group, or isobutyl group.

Also, the present invention provides the aforementioned chromatography packing material wherein said support is spherical porous silica.

Furthermore, the present invention provides the aforementioned packing material for chromatography wherein said silica is spherical or crushed and its average particle size is 1-200 micrometers.

Also, the present invention provides the aforementioned packing material for chromatography wherein said silica is porous and the average pore size of its pores is 10-2,000 angstroms.

Also, the present invention provides a method for separating a substance containing highly polar substances by means of a column packed with the aforementioned packing material for chromatography, using an aqueous solution containing 50% or more of a water soluble organic solvent for the mobile phase.

Furthermore, the present invention provides a method for separating a substance containing highly polar substances by means of a column packed with the aforementioned packing material for chromatography, using an organic solvent that does not contain water for the mobile phase.

### ADVANTAGEOUS EFFECTS

By using the packing material of the present invention, compared with conventional packing materials, superior separation with very sharp peaks and sufficient retention times can be achieved based on the hydrophilic interaction of polar compounds (specifically, sugars, nucleic acid bases, amino acids, vitamins, hormones, hydrophilic drugs, peptides, etc.).

More specifically, in the case of the packing material of the present invention, unlike the packing material in Non-Patent Document 2, phosphorylcholine groups can be introduced onto the substance surface quantitatively and at a high density without damaging the fine structure and no unreacted functional groups other than phosphorylcholine groups are introduced either.
Also, when silica is used for the packing material, phosphorylcholine groups are bulkier than common hydrophilic functional groups (diol groups and carbamoyl groups) and therefore there is an advantage in that the target substance is prevented from interacting with the negatively charged silica surface. Furthermore, unlike equally bulky zwitterions other than the phosphorylcholine group (the sulfonic acid/quaternary ammonium type and carboxylic acid/quaternary ammonium type), there is no electric charge.
Therefore, the phosphorylcholine group enables preparation of a packing material for which interactions other than the hydrophilic interactions is very much suppressed.

In the present invention, it became possible to prevent a reduction in the analysis sensitivity due to adsorption of trace ionic substances and degradation of the peak shape (tailing) and achieve excellent separation of polar compounds.

### BRIEF DESCRIPTION OF DRAWINGS

[Fig. 1] It is a 1H-NMR spectrum of the chemical compound of formula (9).
[Fig. 2] It is a mass spectrum of the chemical compound of formula (9).
[Fig. 3] It is a 1H-NMR spectrum of the chemical compound of formula (10).
[Fig. 4] It is a mass spectrum of the chemical compound of formula (10).
[Fig. 5] It is a FT-IR spectrum of the packing material of Example 1.
[Fig. 6] It is a 1H-NMR spectrum of the chemical compound of formula (11).
[Fig. 7] It is a chromatogram of the packing material of Example 1.
[Fig. 8] These are chromatograms of the packing materials of Example 1 and Comparative example 1.
[Fig. 9] These are chromatograms of the packing materials of Example 1 and Comparative example 2.
[Fig. 10] These are chromatograms of the packing materials of Example 1 and Comparative example 2.

### BEST MODE FOR CARRYING OUT THE INVENTION

"A surface modifier and the packing material of the present invention that is prepared by treating the support surface with thereof"

### <Surface modifier>

The phosphorylcholine derivative shown in the following formula (8) is dissolved in distilled water. The phosphorylcholine derivative of the following formula (8) is a prior art chemical compound and commercially available.

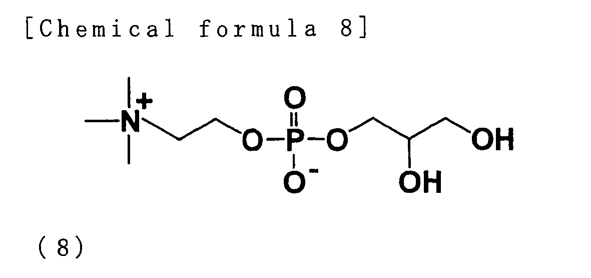

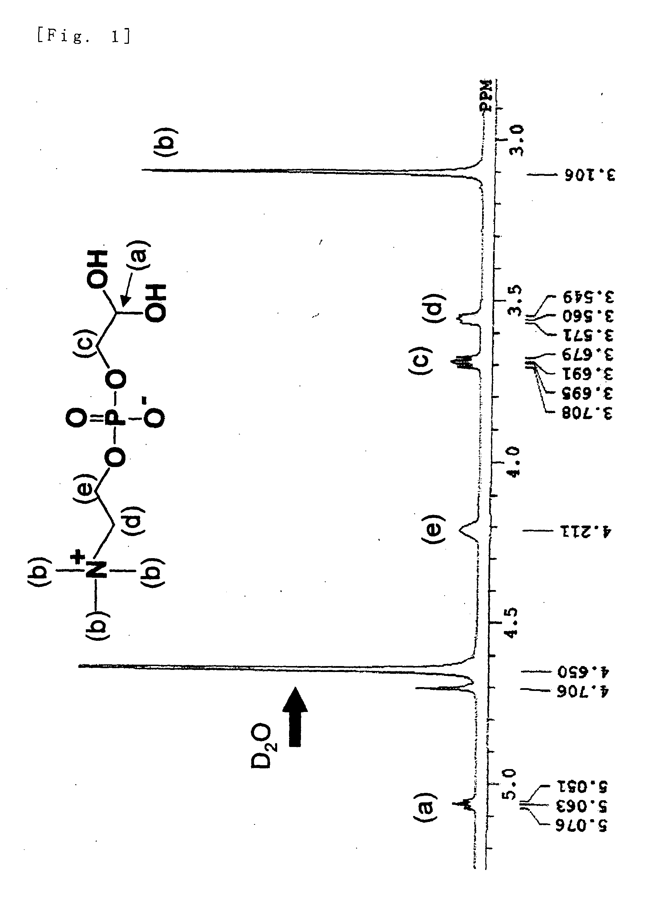

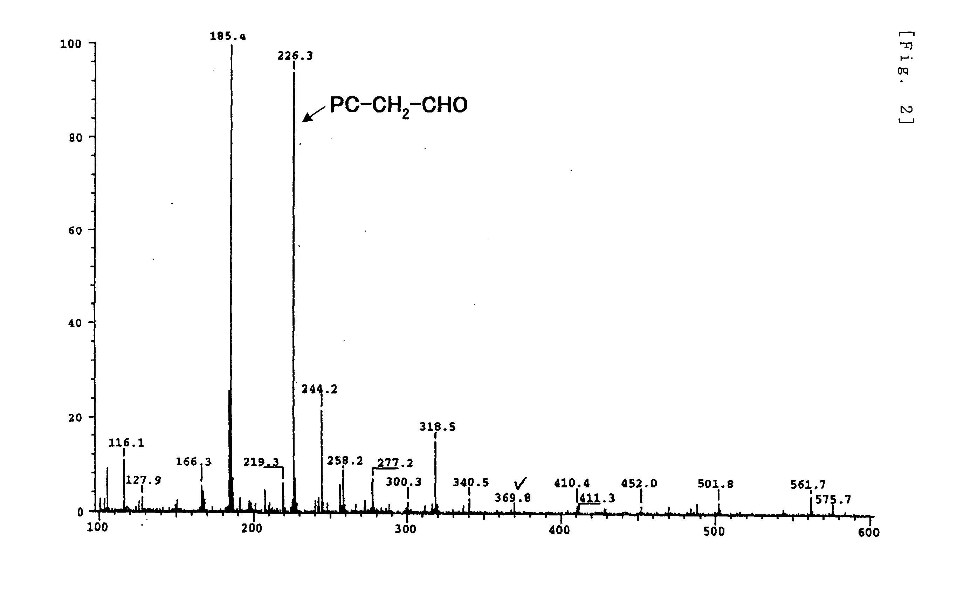

An aqueous solution of the chemical compound of formula (8) is cooled in an ice water bath; then sodium periodate is added, followed by five hours of stirring. The reaction fluid is concentrated under reduced pressure and dried under reduced pressure; methanol is used to extract a phosphorylcholine derivative having an aldehyde group shown in the following formula (9). The structural formula and the NMR spectrum are shown in Fig. 1 and the mass spectrum is shown in Fig. 2.

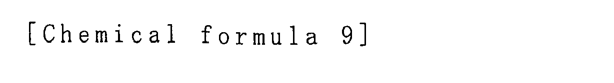

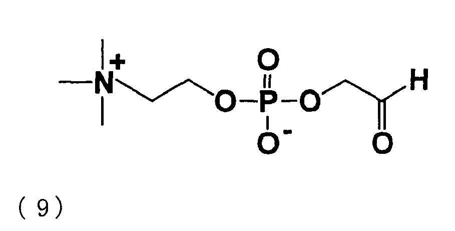

0.5 equivalents of 3-aminopropyltrimethoxysilane is added to the methanol solution of formula (9). This mixed solution is stirred for a prescribed amount of time at room temperature and cooled with ice; an appropriate amount of sodium cyanohydroborate is then added and the temperature is returned back to room temperature, followed by 16 hours of stirring. During this time dry nitrogen is continuously fed through the reaction vessel. After filtering the precipitate, a methanol solution of formula (6) and/or (7) is obtained.

A purification method of these chemical compounds is described below. Purification methods of the chemical compound of the present invention are not limited to the following.
The obtained methanol solution is concentrated under reduced pressure and the residue is dissolved in distilled water. This aqueous solution is used as a sample. A high speed liquid chromatography column CAPCELL PAK SCX UG80 S-5 (size: 4.6 mm i.d. x 250 mm) (from Shiseido), which is capable of hydrophobic interaction and cation exchange, is connected to a HPLC apparatus and equilibrated with 0.2 mmol/L phosphate buffer (pH3. 5) at a flow rate of 1 mL/minute, followed by injection of 10 uL of the sample. A chromatogram can be obtained by using a differential refractometer as a detector, and the target chemical compound can be isolated.
These chemical compounds, when they are in the form of methanol solutions before the purification, can also be used to modify the surface of the support such as silica.

The procedure described above can be carried out in the same way even when m and n in the chemical compounds represented by formula (6) or (7) change. The procedure shown here is for m = 3 and n = 2. Furthermore, a secondary amine can be inserted between the silane portion and the phosphorylcholine group by using 3-(2-aminoethylaminopropyl) trimethoxysilane and such for the silane compound having an amino group; this can be done with the same procedure as described above. The reaction solvent is not limited in particular; in addition to methanol, which was mentioned above, water, alcohols such as ethanol, propanol, and butanol, and aprotic solvents such as N,N-dimethylformamide and dimethylsulfoxide can be used. Note, however, that a dehydrated solvent is preferable to prevent polymerization of the organic silane compound during the reaction.
If a methoxy group (OCH₃) in formula (6) or (7) is replaced by an ethoxy group (OC₂H₅), then the reaction is carried out by using ethanol instead of methanol; if it is replaced by Cl, then dimethylformamide or dimethylsulfoxide is used instead.
Furthermore, even when one or two of the methoxy groups, ethoxy groups, or Cl's to be bonded to Si is replaced by a methyl group, ethyl group, propyl group, isopropyl group, or isobutyl group, the preparation can be carried out in the same manner as described above.

The chemical compound represented by formula (7) can also be prepared by using a phosphorylcholine derivative having a carboxyl group.

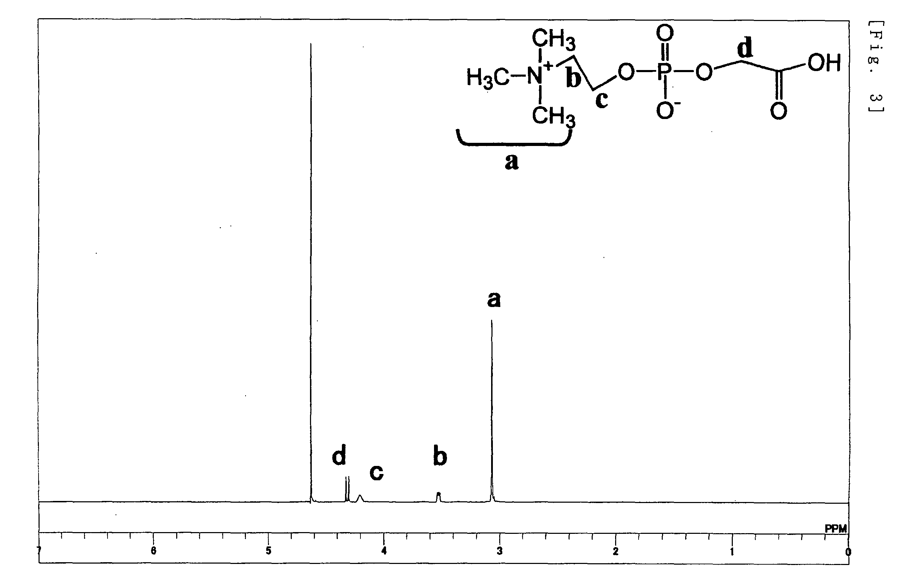

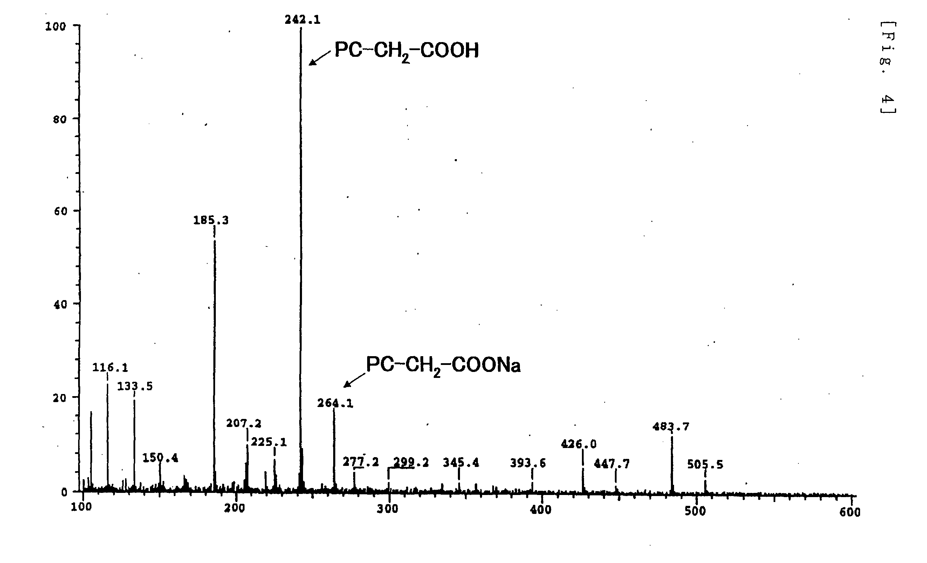

Glycerophosphorylcholine, sodium periodate, and ruthenium trichloride (hydrate) are added to an acetonitrile aqueous solution. After stirring at room temperature and filtration, the solvent is removed from the filtrate. The target substance is extracted from the obtained solid by using methanol and methanol 1 is removed to obtain the phosphorylcholine derivative having a carboxyl group represented by the following formula (10). The structural formula and the NMR spectrum are shown in Fig. 3 and the mass spectrum is shown in Fig. 4.
Water can be used for the reaction solvent. In addition to sodium periodate, other periodates and periodic acid can be used. In addition to ruthenium trichloride, other divalent or trivalent ruthenium compounds and their hydrates can be used.

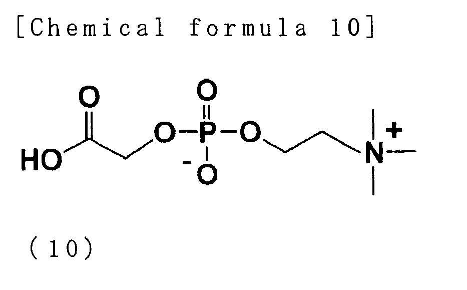

Next, 0.5 equivalents of 3-aminopropyltrimethoxysilane and one equivalent each of N-hydroxysuccine imide (NHS) and N-ethyl-N'-3-diaminopropylcarbodimide (EDC) are added to a methanol solution of the compound represented by formula (10). This mixed solution is stirred at room temperature for three hours to obtain the compound represented by formula (7).
For the reaction solvent, solvents other than methanol, such as N,N-dimethylformamide, dimethylsulfoxide, and chloroform, can be used. Not only NHS and EDC but also dicyclocarbodiimide (DCC) and carboxydiimidazole (CDI) can be used.
The procedure described above can be carried out in the same way even when m and n in the chemical compounds represented by formula (7) change. The procedure shown here is for m = 3 and n = 2. Note, however, that a dehydrated solvent is preferable to prevent polymerization of the organic silane compound during the reaction.
If a methoxy group (OCH₃) in formula (7) is replaced by an ethoxy group (OC₂H₅) then the reaction is carried out by using ethanol instead of methanol; if it is replaced by Cl, then dimethylformamide or dimethylsulfoxide is used instead.
Furthermore, even when one or two of the methoxy groups, ethoxy groups, or C1's to be bonded to Si are replaced by a methyl group, ethyl group, propyl group, isopropyl group, or isobutyl group, the preparation can be carried out in exactly the same manner as described above.

### <Preparation of a packing material for hydrophilic interaction chromatography>

By using the aforementioned surface modifier, the packing material for chromatography of the present invention having a desired amount of phosphorylcholine groups can be easily prepared by modifying the support surface.
Specifically, phosphorylcholine groups are introduced onto the support surface by means of a dehydration reaction between hydroxyl groups present on the support surface and Si-OCH₃ of the compounds of formulas (6) and (7).

20 mL of distilled water is added to 20 mL of a methanol solution of the compounds of formulas (6) or (7) (0.3 mmol/mL), and 4 g of spherical highly pure silica having an average particle size of 7 micrometers, average pore size of 300 angstroms, and specific surface area of 100 m²/g is added. This powder dispersion liquid is refluxed in an oil bath at 80 °C; after five hours, the powder is filtered and rinsed with methanol, followed by drying under reduced pressure at 80 °C for three hours, to obtain powder having phosphorylcholine groups directly on the surface.
For the reaction solvent, in addition to the water/methanol mixed solvent, protic solvents such as water, ethanol, and 2-propanol, and aprotic solvents such as dimethylsulfoxide, dimethylformamide, toluene, and diethyl ether can be used individually or in combinations.

When there is no hydroxyl group on the support surface, an effective method is to dissolve the compounds of formula (6) or (7) in a volatile solvent and apply the solution on the material surface, followed by drying of the solvent. Specifically, an appropriate amount, according to the specific surface area of the material, of a methanol 1 solution of the compounds of formulas (6) and (7) (0.3 mmol/mL) is directly applied on the material. Next, methanol is evaporated in a temperature range of 10-250 °C. The Si-OCH₃'s of the compounds of formulas (6) or (7) can form Si-O-Si bonds through a dehydration reaction with each other and coat the material surface. This dehydration reaction is a prior art. This membrane that forms when methanol evaporates makes bonds here and there with hydroxyl groups that exist in a minute amount on almost any material surface, which provides stable surface modification.
This method is a very effective surface modification method not only for a support not having hydroxyl groups but also for a support having hydroxyl groups.

The largest difference between a method in which amino groups are introduced onto the support surface first and the compound containing the aldehyde derivative obtained by the oxidative ring-opening reaction of glycerophosphorylcholine is introduced and the aforementioned method is the presence/absence of unreacted amino groups on the material surface.
That is, the aforementioned method can introduce only phosphorylcholine groups onto the object surface without coexisting unreacted amino groups. In the case of introducing amino groups onto the powder surface in advance, the aldehyde derivative of glycerophosphorylcholine in the liquid phase has to react with amino groups on the solid surface and therefore the reaction rate is low because of diffusion control, steric hindrance due to the stereoscopic structures on the solid surface, stereoscopic properties of the phosphorylcholine group itself, etc. Therefore, phosphorylcholine groups can be introduced only to approximately 30% of the amino groups. The residual amino groups can be blocked to a certain extent by bonding another low molecular weight compound, but it is difficult to maintain hydrophilicity of the support's surface and also it is not possible to block all of them.

Also, when there are many residual amino groups on the support's surface, since amino groups are strongly basic, mainly acidic chemical compounds have a very strong electrical interaction with them, which mostly results in adsorption. When used for a packing material for chromatography, this worsens the recovery rate of the chemical compound of interest and causes excessive tailing of the peaks.

Examples of the support used in the present invention include inorganic porous substances such as silica, activated carbon, zeolite, alumina, and clay minerals, and porous organic polymer resins. The support is preferably in a powder form. Preferable is spherical or crushed porous silica. The average particle size of the spherical silica is 1-200 micrometers, preferably 1-10 micrometers, and the average size of the fine pores on the porous silica is 10-2000 angstroms, preferably 50-100 angstroms; the specific surface area is 0.01-800 m²/g_{.}

Using a column packed with the packing material for chromatography of the present invention and an aqueous solution containing 50% or more of a water soluble organic solvent for the mobile phase, a substance containing highly polar substances can be separated by utilizing the hydrophilic interactions.
The water soluble organic solvent here is a solvent commonly used for high performance liquid chromatography such as acetonitrile, dimethylsulfoxide, dimethylformamide, and aliphatic alcohols such as methanol. Multiples of these can be mixed with arbitrary ratios for use.
Obviously, the additives commonly used in the mobile phase of high performance liquid chromatography, such as salts, pH adjustment agents, pH buffers, and separation adjustment agents can be used.

Using a column packed with the packing material for chromatography of the present invention and an organic solvent that does not contain water for the mobile phase, a substance containing highly polar substances can be separated by utilizing the hydrophilic interactions.
Examples of the organic solvent include solvents commonly used for high performance liquid chromatography, that is, acetonitrile, dimethylsulfoxide, dimethylformamide, and aliphatic alcohols such as methanol, cyclic alcohols such as cyclohexanol, as well as cyclohexane, toluene, xylene, and benzene; multiples of these can be mixed with arbitrary ratios for use.
Obviously, the additives commonly used in the mobile phase of the high performance liquid chromatography, such as salts, pH adjustment agents, pH buffers, and separation adjustment agents can be used.

By using the packing material and the analysis conditions of the present invention, compared with conventional separation technology, superior separation with very sharp peaks and sufficient retention times can be achieved based on the hydrophilic interaction of polar compounds, specifically, sugars, nucleic acid bases, amino acids, vitamins, hormones, hydrophilic drugs, peptides, etc.

### EXAMPLES

The present invention is described further in detail below by referring to Examples. The present invention is not limited to these Examples.

"Example 1: Packing material for hydrophilic interaction chromatography treated with an organic silane compound having a spacer consisting of an amide bond and a phosphorylcholine group at the end"

5 g (19.4 mmol) of glycerophosphorylcholine, 17 g (79.7 mmol, 4.1 eq) of sodium periodate (from Wako Pure Chemical Industries, ltd.), 81 mg (0.39 mmol, 0.02 moleq) of ruthenium trichloride (from Wako Pure Chemical Industries, ltd.), 70 g of ion-exchanged water and 30 g of acetonitrile were put into a 200 mL flask. After stirring for two hours at room temperature, filtering was carried out and the solvent was removed from the filtrate. The target substance was extracted from the obtained solid by using methanol, and then methanol 1 was removed to obtain the phosphorylcholine derivative having a carboxyl group represented by formula (10). An NMR spectrum of the compound of formula (10) is shown in Fig. 3 and its mass spectrum is shown in Fig. 4.

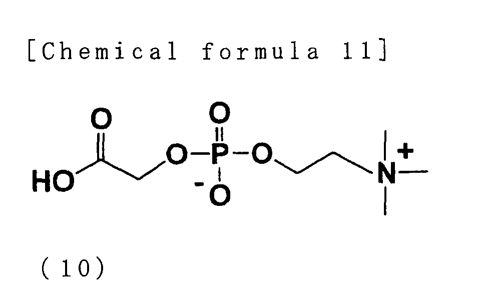

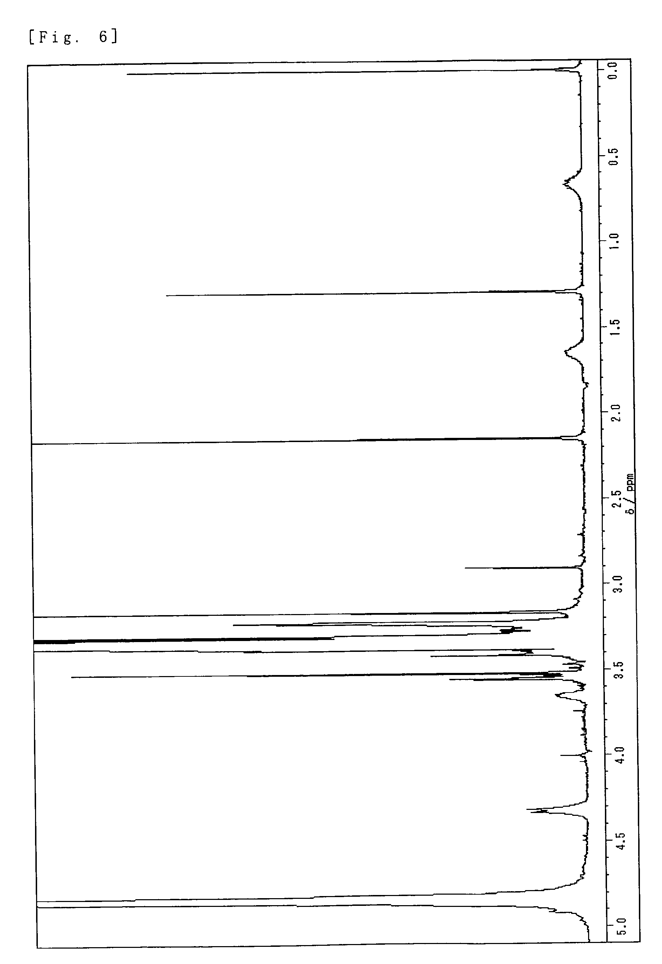

3 g (12.4 mmol) of the compound of the aforementioned formula (10) was dissolved in 100 mL of dehydrated methanol, and the air inside the vessel was replaced by dry nitrogen. Next, 1.1 g (6.2 mmol) of 3-aminopropyltrimethoxysilane, 1.4 g (12.4 mmol) of N-hydroxysuccineimide, and 2.4 g (12.4 mmol) of N-ethyl-N'-3-dimethylaminopropylcarbodiimide were added, followed by 16 hours of reaction time at -10 °C, to obtain a solution containing an organic silane compound having a spacer consisting of the amide bond shown in the following formula (11) and the phosphorylcholine group at the end. An NMR spectrum of the chemical compound represented by formula (11) is shown in Fig. 6. 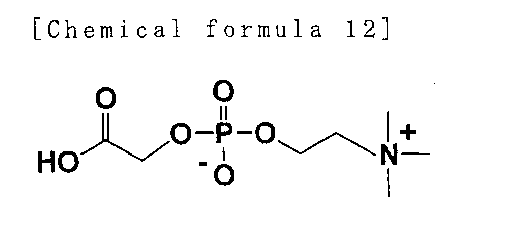 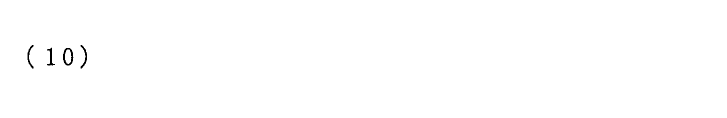 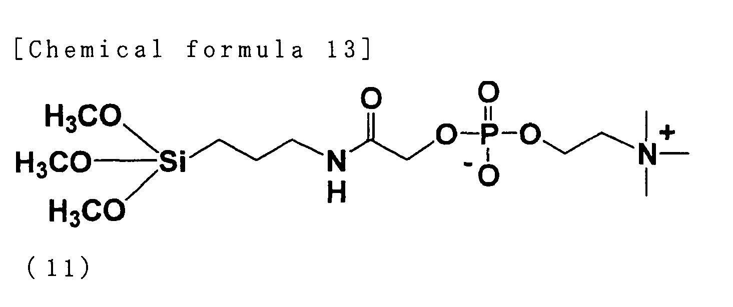 A compound represented by formula (2) wherein m = 3, n = 2, R is formula (4) (L = 5) can be obtained by a similar procedure except for the fact that 0-phosphorylcholine hydroxyhexanoic acid, which has a saturated alkyl chain having five carbon atoms between the phosphorylcholine group and the carboxyl group, was used instead of the compound represented by the aforementioned formula (10).

35 mL of distilled water was added to a solution (30 mL) containing the compound of formula (11) (0.25 mmol/mL), to which 14 g of silica having an average particle size of 5 micrometers, average fine pore size of 10 nm, and specific surface area of 350 m²/g was added. This powder dispersion solution was refluxed for five hours at 80 °C. After the refluxing, filtering and rinsing were carried out using 100 mL of methanol 1 to obtain the target packing material. The nitrogen content of the packing material obtained with the aforementioned procedure was 0.32 mmol/g. Since there are 2 mols of nitrogen atoms per 1 mol of the modifying group, this means 0.16 mmol/g of the modifying group was introduced onto the silica with this method.

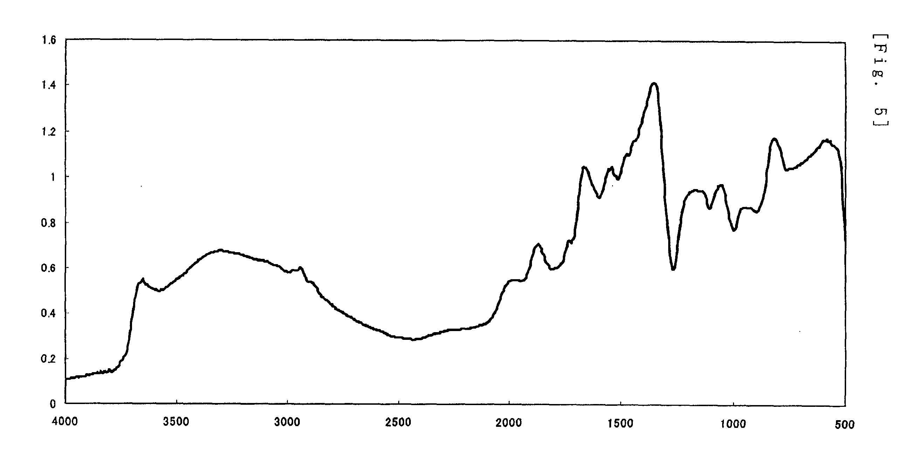

Fig. 5 shows a FT-IR spectrum of the packing material prepared in this Example.
Absorption specific to amide bonding is observed near 1650 cm⁻¹.

The packing material prepared in Example 1 was packed into an empty column having an inner diameter of 4.6 mm and a length of 250 mm by means of a common slurry method. The acquisition conditions of the chromatogram are as follows.
Mobile phase: 10 mmol/L HCOONH4,
   CH3CN/H20=90/10 (pH=7.19)
Flow rate: 1.0 mL/min
Temperature: 40 °C
Detection: UV 254 nm

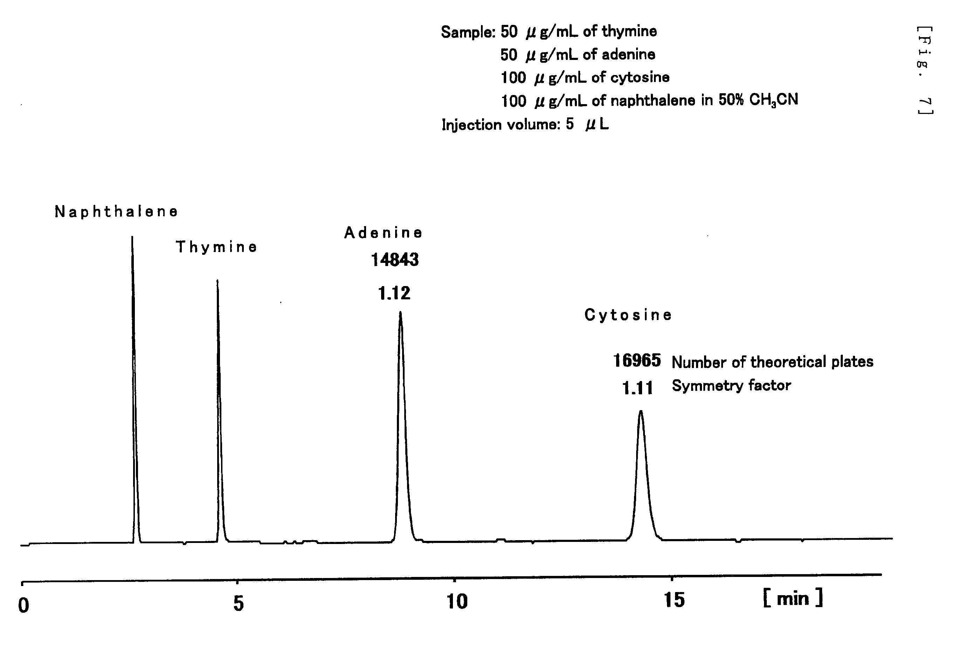

Fig. 7 shows the results of the analysis of three kinds of nucleic acid base compounds and naphthalene conducted by using columns packed with the packing material for chromatography of the present invention. With a common reverse phase column, naphthalene, which is highly hydrophobic, exhibits the longest retention time; however, with the packing material of the present invention, it is shown that the three kinds of nucleic acid bases, which are polar compounds having a higher hydrophilicity than naphthalene, have longer retention times. Considering the hydrophilic interaction chromatography retains hydrophilic compounds longer and the reverse phase chromatography retains hydrophobic compounds longer, the packing material of the present invention is shown to achieve separation by the hydrophilic interactions.
Furthermore, by means of the present invention, the highly hydrophilic nucleic acid bases are also separated from each other very well. Also, the symmetry factor, which indicates the symmetry of the peak (Symmetry factor = 1 means perfect symmetry, if it is more than 1 there is some tailing (latter half of the peak is dragging) is close to 1, which indicates very good separation.

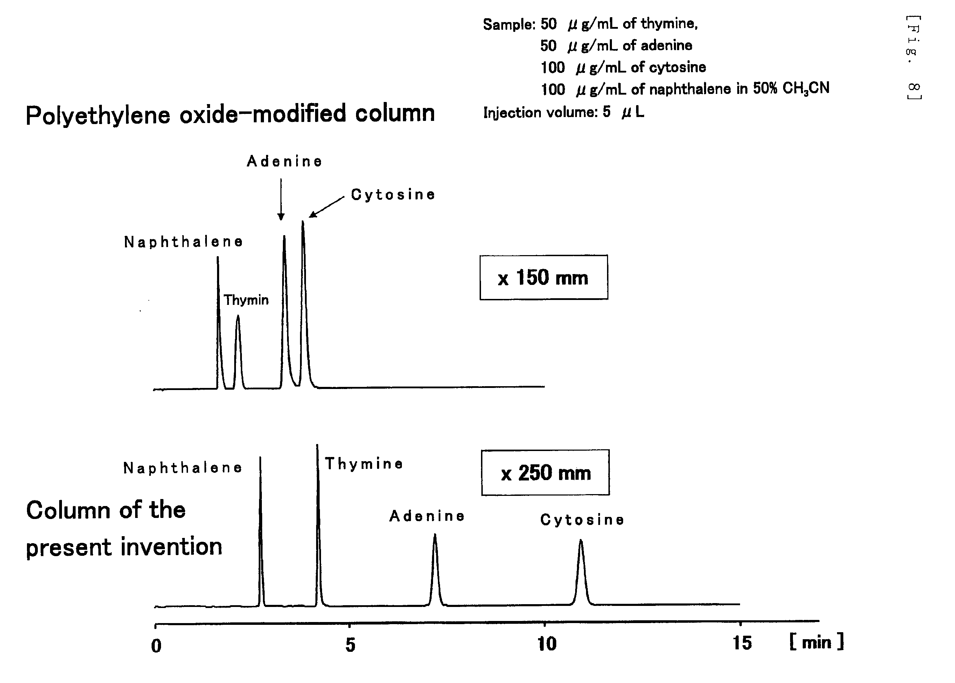

"Comparative example 1: Comparison with packing materials having common hydrophilic functional groups in terms of the hydrophilic interactions"
Fig. 8 shows the comparison between the packing material of the present invention and a column packing material prepared by modifying the identical silica as the one in Example 1 with polyethylene oxide, which is a representative hydrophilic functional group.
The acquisition conditions of the chromatogram are as follows.
Mobile phase: 10 mmol/L HCOONH4,
   CH3CN/H20=90/10 (pH=7.19)
Flow rate: 1.0 mL/min
Temperature: 40 °C
Detection: UV 254 nm

The column of the Comparative example is shorter (150 mm), but considering the retention time is proportional to the column length, Fig. 8 clearly indicates that the column of the present invention has much longer retention times compared with a common modification method in hydrophilic interaction chromatography. This result was revealed only after conducting hydrophilic interaction chromatography by using phosphorylcholine groups.

"Comparative example 2: Comparison with a representative commercially available packing material for hydrophilic interaction chromatography in terms of the hydrophilic interactions"

Shown next is a comparison with TSKgel Amide-80 5 micrometers (Tosoh Corporation), which is one of the most widely used hydrophilic interaction chromatography columns. The column used in this Comparative example is said to be silica onto which carbamoyl groups have been immobilized. The chromatography conditions are as follows:
Column: 4.6 mm i.d. x 250 mm
Temperature: 40 °C
Mobile phase:
   10 mmol/L HCOONH4, CH3CN/H20=90/10 (pH=7.19)
   10 mmol/L HCOONH4, CH3CN/H20=90/10 (pH=3.50)
Flow rate: 1.0 mL/min
Detection: UV 254 nm
Sample: 50 ug/mL of thymine, 50 ug/mL of adenine,
   100 ug/mL of cytosine,
   100 ug/mL of naphthalene in 50% CH3CN
Injection volume: 5 uL

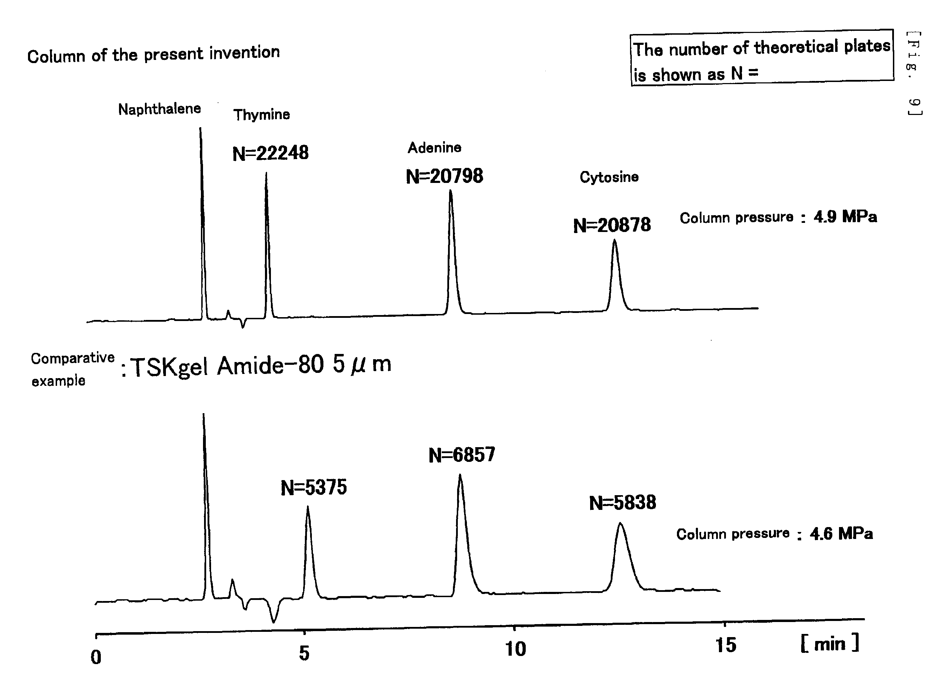

Two results of comparison between the two columns with the same size are shown below.
First, the results using a mobile phase having an acidic pH are shown in Fig. 9. It is believed that, when the mobile phase is acidic, the column as a whole becomes electrically neutral because the silanol groups remaining on the silica, which is the column packing material support, are neutral, and that therefore interactions other than the hydrophilic interactions do not exist.
In this condition the packing material of the present invention exhibited more retention than Comparative example 2. This indicates that the column of the present invention exhibits stronger hydrophilic interactions.
What should be noted furthermore is the magnitude of the number of theoretical plates of the peaks obtained with the column of the present invention (the higher the number of theoretical plates, the sharper the peaks). In the present invention, a number of theoretical plates of 20,000 or higher was obtained for every nucleic acid base compound. Considering the fact that the number of theoretical plates is 5,000-7,000 in Comparative example 2, the column of the present invention is shown to be very effective for separating hydrophilic compounds by means of the hydrophilic interactions.

In Fig. 9, particularly noteworthy is the separation peak of thymine, which is very difficult to analyze with common packing materials for hydrophilic interaction chromatography.
Whereas the theoretical number of plates for Comparative example 2 was 5,000, the column of the present invention exhibited an astonishing 22,000.
That is, the packing material of the present invention is excellent in terms of thymine separation properties.

The fact that such a sharp peak can be obtained indicates that accurate analysis can be done even when there is an adjacent peak.
Furthermore, this means the detection sensitivity can be improved by sharper peaks even for a trace amount of a substance; by simple arithmetic, in this Example, the sensitivity can be expected to improve by four times or more for thymine, and approximately three times for other substances.
As described thus far, the column packing material for hydrophilic interaction chromatography of the present invention is overwhelmingly superior compared with the column packing materials currently most trusted in this field.

It is known that the number of theoretical plates increases as the particle size of the packing material decreases; in this case, the column pressure increases as the particle size decreases. That is, if the column pressure is high and the number of theoretical plates is also high, then this is believed to be due simply to the particle size of the column packing material being smaller.
However, as shown in Fig. 9, the column pressure of the column packing material of the present invention (4.9 MPa) is equivalent to that of Comparative example (4.6 MPa).
This result indicates that the reason why the number of theoretical plates achieved by the column packing material of the present invention is high is not the particle size of the packing material, which would be a reason unrelated to the functional groups. In addition, the change in the number of theoretical plates depending on the particle size occurs due to physical causes and therefore the number of theoretical plates would change at the same rate for all chemical compounds; however, in the present invention, an astounding number of theoretical plates was observed for thymine.
Such a tendency to increase and decrease for different chemical compounds negates physical characteristics of the packing material as the cause and reflects the effect of surface modification.

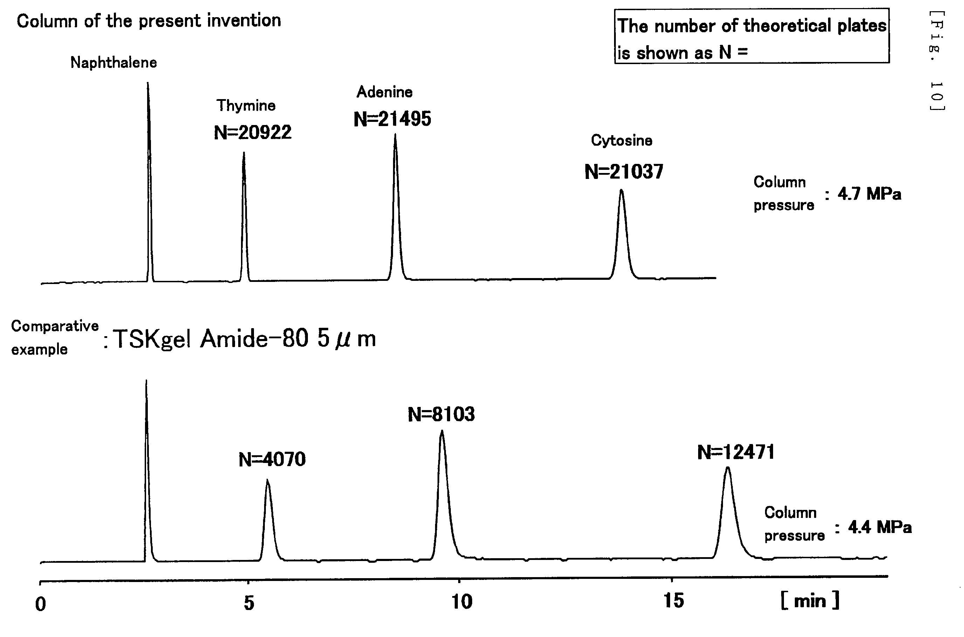

Results for a mobile phase that has neutral pH are shown in Fig. 10. When the mobile phase is neutral, the silanol groups remaining on the silica, which is the support of the column packing material, becomes acidic and therefore common surface modification methods would make the whole column negatively charged.
Therefore, this is not desirable for a hydrophilic interaction chromatography column since the ionic interactions are irregularly involved and adsorption of positively charged basic substances and a reduction in the number of theoretical plates are nduced. A comparison between Fig. 9 and Fig. 10 from this point of view reveals that the retention time of each substance substantially increases in the Comparative example column due to the mobile phase being neutral. Considering the fact that the analysis target substance is a nucleic acid base, which is a basic substance with a tendency to have a positive charge (i.e. it interacts with the negatively charged packing material), it is obvious that the ion exchange interactions occurred in the Comparative example column. This is probably due to the silanol groups remaining on the silica surface. Such an increase in the retention time in the neutral mobile phase of the Comparative example is an undesirable kind of increase in the retention time.

On the other hand, the column of the present invention hardly shows any change in the retention time even when the pH of the mobile phase changes. This result indicates that the present invention is a separation based on pure hydrophilic interactions. Moreover, its retention is higher than that of commercial packing materials and the number of theoretical plates is very high.

### INDUSTRIAL APPLICABILITY

The phosphorylcholine-containing column packing material for hydrophilic interaction chromatography of the present invention is very effective for separation and analysis of polar chemical compounds (i.e. hydrophilic substances) when used with the indicated mobile phase compositions.
Hydrophilic substances that can be separated with the present invention include sugars, nucleic acid bases that constitute DNA and such, amino acids that constitute proteins, and water soluble vitamins and hormones, which are biologically very important chemical compounds; the present invention achieves highly sensitive detection and high performance separation in their analysis.

## Claims

1. A packing material for hydrophilic interaction chromatography wherein the phosphorylcholine groups, represented by the following formula (1), are chemically directly bonded to the support surface.

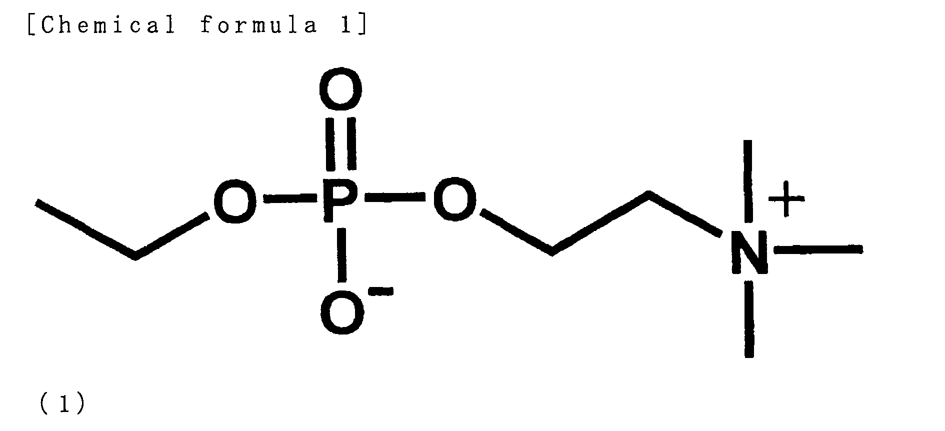

2. A packing material for hydrophilic interaction chromatography consisting of a modified support treated with the surface modifier represented by the following formula (2). 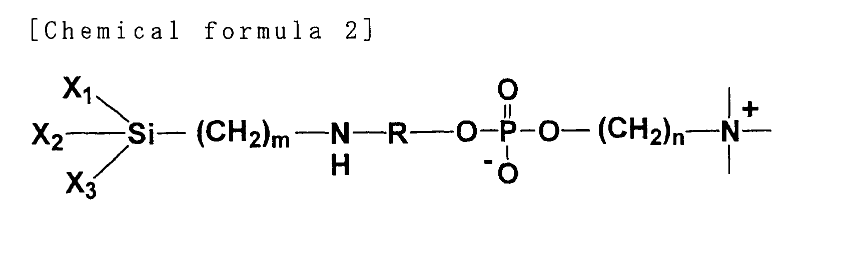 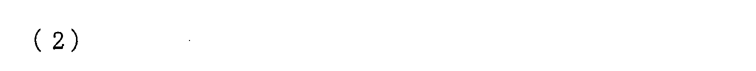 In this formula, m denotes 2-6 and n denotes 1-4.
X₁, X₂ and X₃, independent of each other, denote a methoxy group, ethoxy group, or halogen. Up to two of X₁, X₂ and X₃ can be any of the following groups: a methyl group, ethyl group, propyl group, isopropyl group, butyl group, or isobutyl group.
R is one of the structures in the following formulas (3)-(5) (the chemical compound of formula (2) in the structures of the following formulas (3)-(5) is expressed as A-R-B).
[Chemical formula 3] A-(CH₂)_{L}-B (3) 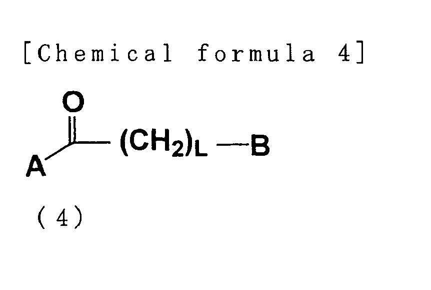 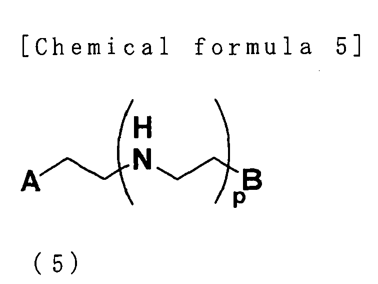
In formulas (3)-(5), L is 1-6, P is 1-3.

3. A packing material for hydrophilic interaction chromatography consisting of a modified support treated with the surface modifier represented by the following formula (6) or (7). 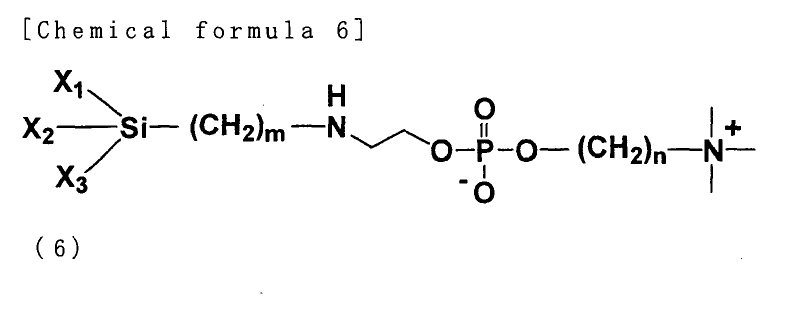 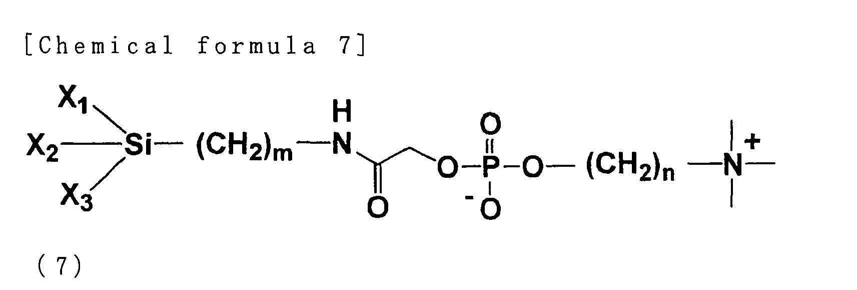 In this formula, m denotes 2-6 and n denotes 1-4. X₁, X₂ and X₃, independent of each other, denote a methoxy group, ethoxy group, or halogen. Up to two of X₁, X₂, and X₃ can be any of the following groups: a methyl group, ethyl group, propyl group, isopropyl group, butyl group, or isobutyl group.

4. The packing material for chromatography of claims 1-3 wherein said support is silica.

5. The packing material for chromatography of claim 4 wherein said silica is spherical or crushed and its average particle size is 1-200 micrometers.

6. The packing material for chromatography of claim 4 or 5 wherein said silica is porous and the average pore size of its pores is 10-2,000 angstroms.

7. A method for separating a substance containing highly polar substances by means of a column packed with the packing material for chromatography of one of claims 1-6, using an aqueous solution containing 50% or more of a water soluble organic solvent for the mobile phase.

8. A method for separating a substance containing highly polar substances by means of a column packed with the packing material for chromatography of one of claims 1-6, using an organic solvent that does not contain water for the mobile phase.
